# EUROPEAN PATENT APPLICATION

(11) **EP 3 239 666 A1**
(43) Date of publication of application: **01.11.2017**
(21) Application number: 16461516.3
(22) Date of filing: 27.04.2016
(51) Int. Cl.: G01F 15/06, G01F 15/14, G01D 11/24, G01D 5/00, G01F 1/075, G01F 1/115, G01F 15/18, G01F 1/05

(54) **AN ELECTRONIC READOUT ASSEMBLY FOR A FLOW METER**

(71) Applicant: PLUM spólka z ograniczona odpowiedzialnoscia, Ignatki 16-001 Kleosin (PL)
(72) Inventor: KLOS, Jacek, 15-523 Grabowka (PL); RUSIECKI, Andrzej, 15-399 Bialystok (PL)
(74) Representative: Kancelaria Eupatent.pl Sp. z.o.o

(57) **Abstract**

An electronic readout assembly (100, 2x0) for a flow meter (3x0), characterized in that the assembly (100, 2x0) comprises: an electronic readout unit (100) comprising a sensor (102) configured to detect rotation of a rotatable indicator (3x2) within the flow meter (3x0), wherein the sensor (102) is located in a protrusion (103) extending from the main surface of a casing (101) of the electronic readout unit (100); an attachment unit (2x0) having a body (2x1) with an opening (2x2) configured to accommodate the sensor (102) in the protrusion (103) of the electronic readout unit (100); wherein the attachment unit (2x0) is configured for attaching the electronic readout unit (100) to the flow meter (3x0) such that when attached, the sensor (102) is located in a position that allows the sensor (102) to detect the rotation of the indicator (3x2) within the flow meter (3x0).

## Description

### TECHNICAL FIELD

The present disclosure relates to an electronic readout assembly for a flow meter.

### BACKGROUND

Conventional mechanical flow meters comprise a rotor member disposed in the path of movement of the liquid flow to be measured, wherein the rotor member is connected via a gear train to a counter, for example comprising a plurality of numerical drums. The counter is typically located in a sealed compartment of the housing of the meter, isolated from the compartment of the housing enclosing the rotor member in contact with the liquid to be measured. To permit the transmission of the movement of the rotor member to the counter through the separation wall between these compartments, there is often used magnetic transmission comprising a pair of magnets: a first magnet, called a drive magnet and connected to the rotor member, drives a second magnet, called a driven magnet, disposed on the first gear of the gear train of the counter. A flow meter of this type is disclosed for example in a US patent US6098456.

One of the movable members of the coupling between the driven magnet and the counter may have an indicator mounted therein, to allow detection of movement of that indicator by an external sensor. For example, this can be a magnet (such as in US6098456) or a metal element in form of a segment of a circle, that can be detected by external sensors, such as induction proximity sensors. That sensor can be connected with an electronic readout unit that converts the movement detected by the sensor to an electronic signal indicating the speed and/or direction of the movement. The electronic readout unit may be further connected to further communication units, allowing for example remote readout of media consumption measured by the flow meter.

So far, electronic readout units with proximity sensors have been mounted directly on the external casing of the conventional mechanical flow meters. For example, a PCT patent application WO2001084089 discloses a fluid meter with magnetic flux sensor. A measuring device, comprising a magnet rotating upon flow of the fluid, is placed in a first chamber (which corresponds to a conventional mechanical flow meter). A sensor for detecting the rotation of the magnet, is placed in a second chamber which is detachably joined directly with the first chamber.

In a configuration as described above, the readout unit must have a casing adapted to be connected directly with the casing of the mechanical flow meter.

It would be advantageous to provide a more universal electronic readout assembly, to allow the readout unit to be used with conventional flow meters of different kinds.

### SUMMARY

The object of the invention is an electronic readout assembly for a flow meter, characterized in that the assembly comprises: an electronic readout unit comprising a sensor configured to detect rotation of a rotatable indicator within the flow meter, wherein the sensor is located in a protrusion extending from the main surface of a casing of the electronic readout unit; an attachment unit having a body with an opening configured to accommodate the sensor in the protrusion of the electronic readout unit; wherein the attachment unit is configured for attaching the electronic readout unit to the flow meter such that when attached, the sensor is located in a position that allows the sensor to detect the rotation of the indicator within the flow meter.

Preferably, at least part of a first surface of the body of the attachment unit adjoins the casing of the flow meter, and at least part of a second surface, opposite to the first surface adjoins the casing of the electronic readout unit.

Preferably, the attachment unit comprises at least one fastener configured to be fastened to at least one fastener of the flow meter.

Preferably, the attachment unit comprises at least one opening configured to be aligned, when attached, with at least one opening of the flow meter.

Preferably, the attachment unit has a form of a clamping ring with a tightenable clearance.

Preferably, when attached, at least part of the body of the attachment unit surrounds the protrusion of the electronic readout unit with the sensor.

Preferably, the sensor Is a proximity sensor configured to detect rotation of the indicator in the form of a metal element.

Preferably, the sensor is a magnetic field sensor configured to detect rotation of the indicator in the form of a magnet.

Another object of the invention is a flow meter assembly comprising the flow meter and the electronic readout assembly as described above.

Another object of the invention is a method for providing electronic readout functionality to a flow meter comprising a rotatable indicator, characterized by providing an electronic readout assembly as described above, attaching the attachment unit to the flow meter and attaching the electronic readout unit to the attachment unit.

### BRIEF DESCRIPTION OF DRAWINGS

The invention has been shown by means of example embodiments on a drawing, wherein:
Fig. 1 shows, in an exploded view, an overview of an assembly.
Figs. 2A, 2B show, in an exploded view, a first embodiment of the assembly.
Figs. 3A, 3B show, in an exploded view, a second embodiment of the assembly.
Figs. 4A, 4B show, in an exploded view, a third embodiment of the assembly.
Figs. 5A, 5B show, in an exploded view, a fourth embodiment of the assembly.

### DETAILED DESCRIPTION

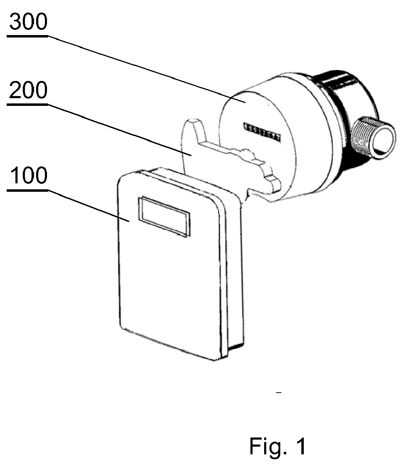

Fig. 1 shows, in an exploded view, an overview of an electronic readout assembly for a flow meter. The assembly comprises an electronic readout unit 100 and an attachment unit 200.

The flow meter 300 comprises a rotatable indicator that rotates upon a flow of the media within the flow meter. The indicator may have a form of a rotatable metal disc, or a section of a metal disc, or a rotatable magnet, as known in the art. The electronic readout unit has a sensor configured to detect rotation of the indicator within the flow meter 300. For example, the sensor may be a proximity sensor configured to detect rotation of the indicator in the form of a section of a disc, when positioned in proximity to that indicator, such as an inductive sensor. The sensor may be also a magnetic field sensor configured to detect rotation of the indicator in the form of a magnet. Such sensors are known in the art and do not need further explanation.

The attachment unit 200 has a body that is shaped such as to allow attaching the electronic readout unit 100 to a particular flow meter 300. Thereby, a single electronic readout unit 100 can be used for a plurality of different types of flow meters 300, via the attachment unit 200 selected for the particular flow meter 300. The attachment unit 200 is a simple element, it may have a body made of plastic or composite material. This allows for more versatile use of the electronic readout unit, which is a complex device comprising many electronic elements. This allows to reduce per-unit manufacturing costs of the electronic readout unit, as a single type of the electronic readout unit 100 can be manufactured and used with different flow meters 300 by provision of an attachment unit 200 dedicated for the particular type of the flow meter 300.

The attachment unit 200 is configured, by the shape of its body, such that when it attaches the electronic readout unit 100 to the flow meter 300, the sensor 102 of the electronic readout unit 100 is located in a position that allows the sensor 102 to detect the rotation of the indicator within the flow meter 300.

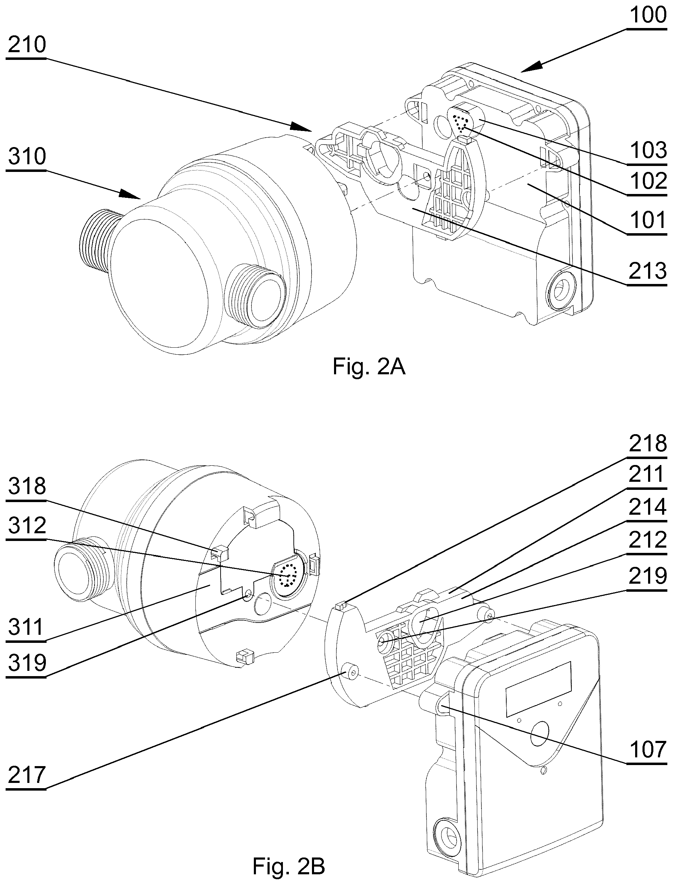

Figs. 2A, 2B show, in an exploded view, a first embodiment of the assembly.

The assembly comprises an electronic readout unit 100 comprising a sensor 102 (preferably, a proximity sensor, which shown schematically only) located in a protrusion 103 extending from the main surface of a casing 101 of the electronic readout unit 100. In the presented embodiment the protrusion 103 has a triangular shape, but other shapes are possible as well, depending on the type of the electronic readout unit 100 and the type of the sensor 102 installed therein.

The assembly further comprises an attachment unit 210 of a first type configured to allow attachment of the electronic readout unit 100 to a first type of a water meter 310. The water meter 310 comprises within its casing 311 a rotatable indicator 312 (shown schematically only).

The attachment unit 210 has a body 211 with an opening 212 configured to accommodate the protrusion 103 of the electronic readout unit 100 with the sensor 102.

The body 211 has, on its first surface 213, a plurality of fasteners 218 matching a plurality of fasteners 318 at the casing 311 of the flow meter 310. Moreover, the body 211 has an opening 219 that matches, when attached, with an opening 319 in the casing 311 of the flow meter 310. The attachment unit 210 can be attached to the flow meter by matching (inserting) the fasteners 218 and 318 and screwing it with a screw (not shown for clarity of the drawing) through the openings 219, 319. Thereby, when attached, at least part of the first surface 213 of the body 211 of the attachment unit 210 adjoins the casing 311 of the flow meter 310.

Furthermore, the body 211 has a fastening arrangement 217 that matches with a fastening arrangement 107 of the electronic readout unit 100. In this embodiment, the fastening arrangement 217 comprises a pair of protrusions with threaded holes therein, and the electronic readout unit 100 has openings for accommodation of the protrusions, such that screws (not shown for clarity of the drawing) can be used to fix the electronic readout unit 100 to the body 211 of the attachment unit 210. Therefore, when attached, at least part of a second surface 214 of the body 211, opposite to the first surface 213, adjoins the casing 101 of the electronic readout unit 100.

Thereby, when attached, at least part of the body 211 surrounds the protrusion 103 of the electronic readout unit 100 with the sensor 102, which may facilitate isolation of the sensor 102 from the surrounding environment to eliminate or lower external interferences.

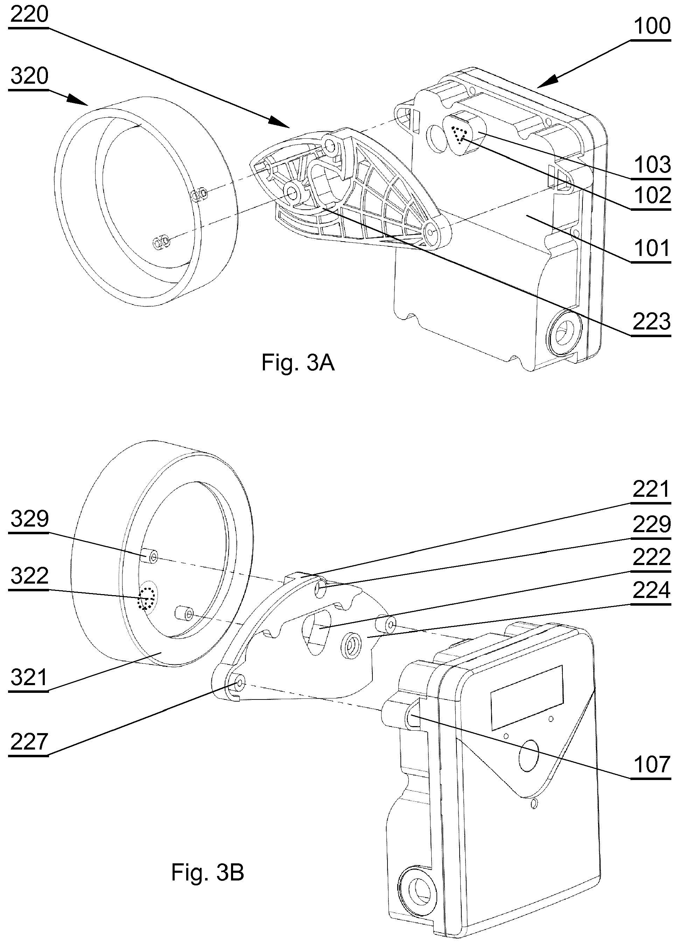

Figs. 3A, 3B show, in an exploded view, a second embodiment of the assembly.

The assembly comprises an electronic readout unit 100 as already explained with respect to the first embodiment.

The assembly further comprises an attachment unit 220 of a second type configured to allow attachment of the electronic readout unit 100 to a second type of a water meter 320. The water meter 320 comprises within its casing 321 a rotatable indicator 322 (shown schematically only).

The attachment unit 220 has a body 221 with an opening 222 configured to accommodate the protrusion 103 of the electronic readout unit 100 with the sensor 102.

The body 221 has, on its first surface 223, a plurality of openings 229 that match, when attached, with openings 329 in the casing 321 of the flow meter 320. The attachment unit 220 can be attached to the flow meter by screwing it with screws (not shown for clarity of the drawing) through the openings 229, 329. Thereby, when attached, at least part of the first surface 223 of the body 221 of the attachment unit 220 adjoins the casing 321 of the flow meter 320.

Furthermore, the body 221 has a fastening arrangement 227 that matches with a fastening arrangement 107 of the electronic readout unit 100, similarly as already explained with respect to the first embodiment. Therefore, when attached, at least part of a second surface 224 of the body 221, opposite to the first surface 223, adjoins the casing 101 of the electronic readout unit 100.

Thereby, when attached, at least part of the body 221 surrounds the protrusion 103 of the electronic readout unit 100 with the sensor 102, which may facilitate isolation of the sensor 102 from the surrounding environment to eliminate or lower external interferences.

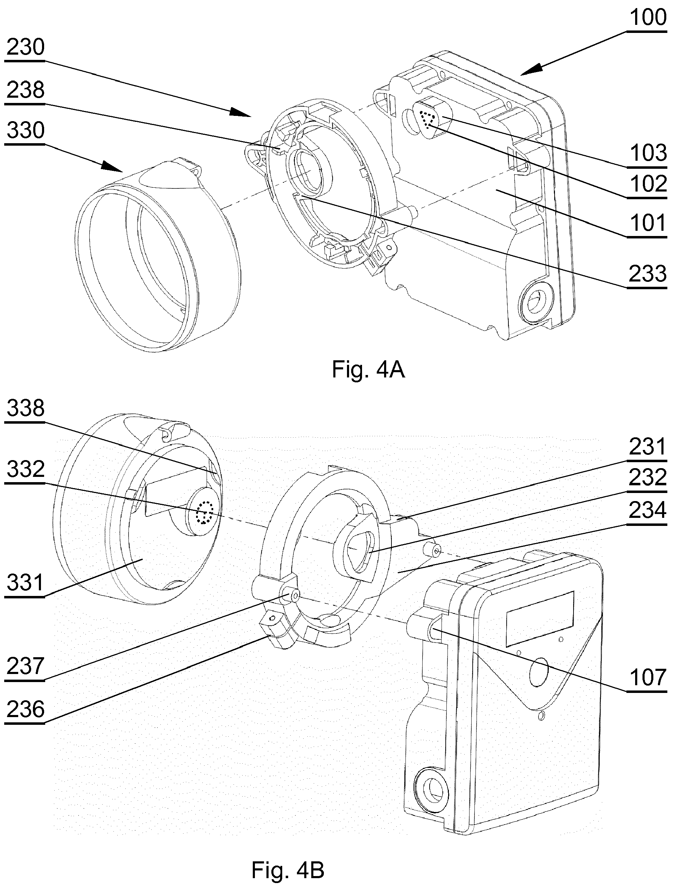

Figs. 4A, 4B show, in an exploded view, a third embodiment of the assembly.

The assembly comprises an electronic readout unit 100 as already explained with respect to the first embodiment.

The assembly further comprises an attachment unit 230 of a third type configured to allow attachment of the electronic readout unit 100 to a third type of a water meter 330. The water meter 330 comprises within its casing 331 a rotatable indicator 332 (shown schematically only).

The attachment unit 230 has a body 231 with an opening 232 configured to accommodate the protrusion 103 of the electronic readout unit 100 with the sensor 102.

The body 231 has, on its first surface 233, a plurality of fasteners 238 (in form of distancing elements) matching a plurality of fasteners 338 (in form of openings) at the casing 331 of the flow meter 330. The attachment unit 230 can be attached to the flow meter by matching the fasteners 238 and 338 (inserting the distancing elements to the openings). To secure the attachment, the body 231 may have a form of a clamping ring, which is tightened, when attached, by tightening the clearance 236 at the circumference of the ring with a screw (not shown). Thereby, when attached, at least part of the first surface 233 of the body 231 of the attachment unit 230 adjoins the casing 331 of the flow meter 330.

Furthermore, the body 231 has a fastening arrangement 237 that matches with a fastening arrangement 107 of the electronic readout unit 100, similarly as already explained with respect to the first embodiment. Therefore, when attached, at least part of a second surface 234 of the body 231, opposite to the first surface 233, adjoins the casing 101 of the electronic readout unit 100.

Thereby, when attached, at least part of the body 231 surrounds the protrusion 103 of the electronic readout unit 100 with the sensor 102, which may facilitate isolation of the sensor 102 from the surrounding environment to eliminate or lower external interferences.

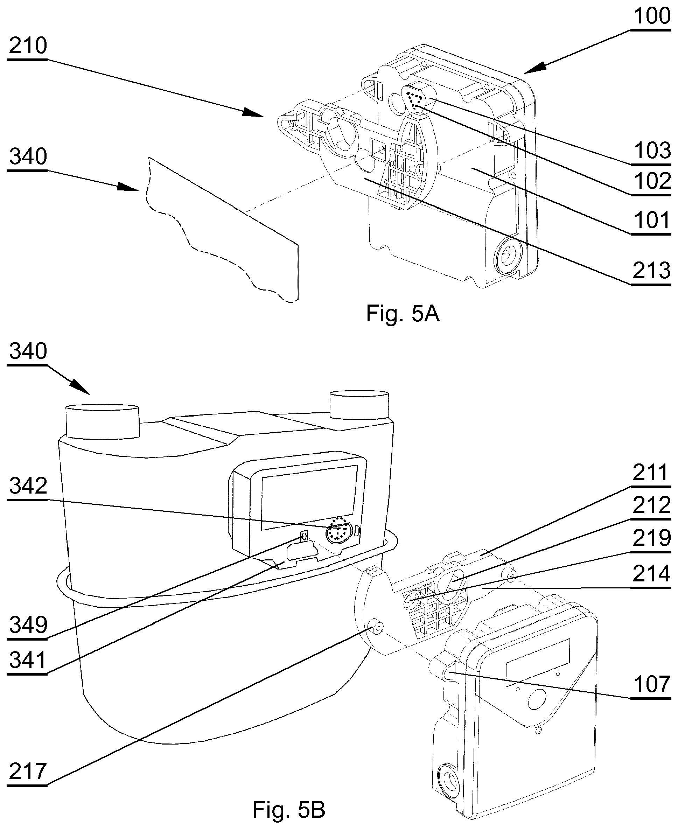

Figs. 5A, 5B show, in an exploded view, a fourth embodiment of the assembly.

The assembly comprises an electronic readout unit 100 as already explained with respect to the first embodiment.

The assembly further comprises an attachment unit 210 of the first type configured to allow attachment of the electronic readout unit 100 to a gas meter 340. The gas meter 340 comprises within its casing 341 a rotatable indicator 342 (shown schematically only).

In this embodiment, the attachment unit 210 can be attached to the flow meter by screwing it with a screw (not shown for clarity of the drawing) through the openings 219, 349. Thereby, when attached, at least part of the first surface 213 of the body 211 of the attachment unit 210 adjoins the casing 341 of the flow meter 340.

This embodiment is indicative of the concept that one type of the attachment unit 210 can be used to connect the electronic readout unit 100 to different types of flow meters, such as the flow meter 310 of the first type and the gas meter 340.

Throughout the claims, reference "x" in numerals is intended to cover all embodiments, from 1 to 3 or from 1 to 4, where appropriate, such that e.g. reference 2x0 indicates any of 210, 220, 230, and reference 3x0 indicates any of 310, 320, 330, 340, to improve clarity of the claims.

## Claims

1. An electronic readout assembly (100, 2x0) for a flow meter (3x0), **characterized in that** the assembly (100, 2x0) comprises:
- an electronic readout unit (100) comprising a sensor (102) configured to detect rotation of a rotatable indicator (3x2) within the flow meter (3x0), wherein the sensor (102) is located in a protrusion (103) extending from the main surface of a casing (101) of the electronic readout unit (100);
- an attachment unit (2x0) having a body (2x1) with an opening (2x2) configured to accommodate the sensor (102) in the protrusion (103) of the electronic readout unit (100);
- wherein the attachment unit (2x0) is configured for attaching the electronic readout unit (100) to the flow meter (3x0) such that when attached, the sensor (102) is located in a position that allows the sensor (102) to detect the rotation of the indicator (3x2) within the flow meter (3x0).

2. The assembly according to claim 1, wherein when attached, at least part of a first surface (2x3) of the body (2x1) of the attachment unit (2x0) adjoins the casing (3x1) of the flow meter (3x0), and at least part of a second surface (2x4), opposite to the first surface (2x3) adjoins the casing (101) of the electronic readout unit (100).

3. The assembly according to any of previous claims, wherein the attachment unit (210, 230) comprises at least one fastener (218, 238) configured to be fastened to at least one fastener (318, 338) of the flow meter (310, 330).

4. The assembly according to any of previous claims, wherein the attachment unit (2x0) comprises at least one opening (2x9) configured to be aligned, when attached, with at least one opening (3x9) of the flow meter (3x0).

5. The assembly according to any of previous claims, wherein the attachment unit (230) has a form of a clamping ring with a tightenable clearance (236).

6. The assembly according to any of previous claims, wherein when attached, at least part of the body (2x1) of the attachment unit (2x0) surrounds the protrusion (103) of the electronic readout unit (100) with the sensor (102).

7. The assembly according to any of claims 1-6, wherein the sensor (102) Is a proximity sensor configured to detect rotation of the indicator (3x2) in the form of a metal element.

8. The assembly according to any of claims 1-6, wherein the sensor (102) is a magnetic field sensor configured to detect rotation of the indicator (3x2) in the form of a magnet.

9. A flow meter assembly comprising the flow meter (3x0) and the electronic readout assembly (100, 2x0) according to any of claims 1-8.

10. A method for providing electronic readout functionality to a flow meter (3x0) comprising a rotatable indicator (3x2), **characterized by** providing an electronic readout assembly (100, 2x0) according to any of claims 1-8, attaching the attachment unit (2x0) to the flow meter (3x0) and attaching the electronic readout unit (100) to the attachment unit (2x0).
